# EUROPEAN PATENT SPECIFICATION

(11) **EP 3 014 412 B1**
(45) Date of publication and mention of the grant of the patent: **30.09.2020**
(21) Application number: 14766534.3
(22) Date of filing: 26.06.2014
(51) Int. Cl.: G06F 3/0488, H04L 12/58, H04M 1/725, H04W 4/12, H04M 1/2745, H04M 1/65

(54) **METHOD FOR PROCESSING AN AUDIO MESSAGE**
VERFAHREN ZUR VERARBEITUNG EINER AUDIONACHRICHT
PROCÉDÉ DE TRAITEMENT D'UN MESSAGE AUDIO

(30) Priority: 28.06.2013 IT RM20130383
(43) Date of publication of application: 04.05.2016
(73) Proprietor: GIACCO, Simone, 00054 Fiumicino (IT)
(72) Inventor: GIACCO, Simone, 00054 Fiumicino (IT)
(74) Representative: Carangelo, Pierluigi
(86) International application number: PCT/IB2014/062633
(87) International publication number: WO 2014/207701

(56) References cited:
- EP-A2- 1 233 599
- EP-A2- 2 059 010
- WO-A2-2007/008321
- US-A1- 2006 189 333
- US-A1- 2012 164 987

## Description

### Technical field of the invention

The present invention refers to a method for processing an audio message by a pocket-sized electronic device, in particular a mobile phone, or a tablet having at least one touch-sensitive part of the screen.

### Background

In the field of mobile telephony, the use of mobile phones not only as devices for making calls, but as devices for transmitting multimedia messages such as pictures, videos or voice messages, is becoming more common.

Methods for transmitting audio messages through the execution of multiple operations already exist. Of particular note is the following method: the operation of selecting a receiver of the message, then the operation of recording the message, and finally the operation of actual sending of the message to the chosen receiver.

One of the most felt needs in the world of telecommunications is the reduction of the number of operations needed for the activation of a certain function.

By simplifying and speeding up the operations needed for the activation of a certain function, it is possible to provide users with a leaner usability of the means of telecommunication.

In fact, the high number of operations needed to conclude the transmission of an audio message sometimes discourages even the most expert users from using a communication system that comprises the sending of audio messages.

The above-mentioned need is particularly felt by older users who have greater difficulty in managing the various functionalities of a mobile phone because of their minor familiarity with electronic devices in general.

Furthermore, the fact that the methods for transmitting audio messages need multiple operations makes them almost impossible to be used in all emergency situations in which there is very little time available to transmit the desired information.

WO2007/008321 A2 discloses instant voice messaging initiated by a single click. US2006/189333 A1 discloses a unified message center for a mobile telephone. EP1233599 discloses a shortcut management on mobile phones.

### Summary of the invention

The technical problem posed is therefore solved by the present invention by providing a method for processing ("processing" meaning the recording and sending of an audio message to a certain receiver), that overcomes the above-mentioned issues with reference to the prior art.

This problem is solved by a method in accordance with claim 1 and also, in accordance with the same inventive concept, by a program for computer in accordance with claim 6.

The preferred characteristics of the present invention are the object of its claims.

The present invention provides some relevant advantages. In particular, the feature of merging several functions of the device into a single operation that the user performs considerably minimizes the time needed to transmit an audio message.

Advantageously, by reducing the number of operations, the possibility of user mistakes while passing between the various functions on the mobile phone is considerably reduced.

This reduction in the possibility of mistakes also implies a greater ease of use of the device for the less expert users, such as old people or children.

A further advantage is that the reduction of time needed to complete the recording and sending operations implies that the function of transmitting an audio message from a mobile phone in case of emergency is also possible.

In addition, the reduction of the above-mentioned time is extremely advantageous for the users who use mobile phones for business reasons and/or who need to send a telephonic message while driving a motor vehicle.

Other advantages, features and use cases of the present invention will become evident in the following detailed description of certain forms of embodiment, presented for exemplary but not restrictive purposes.

### Brief description of the figures

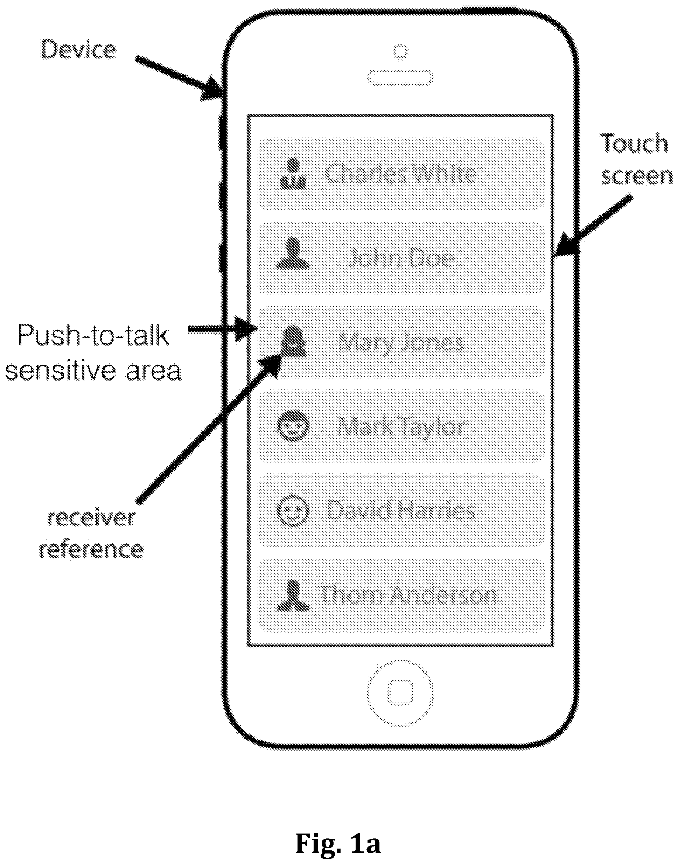

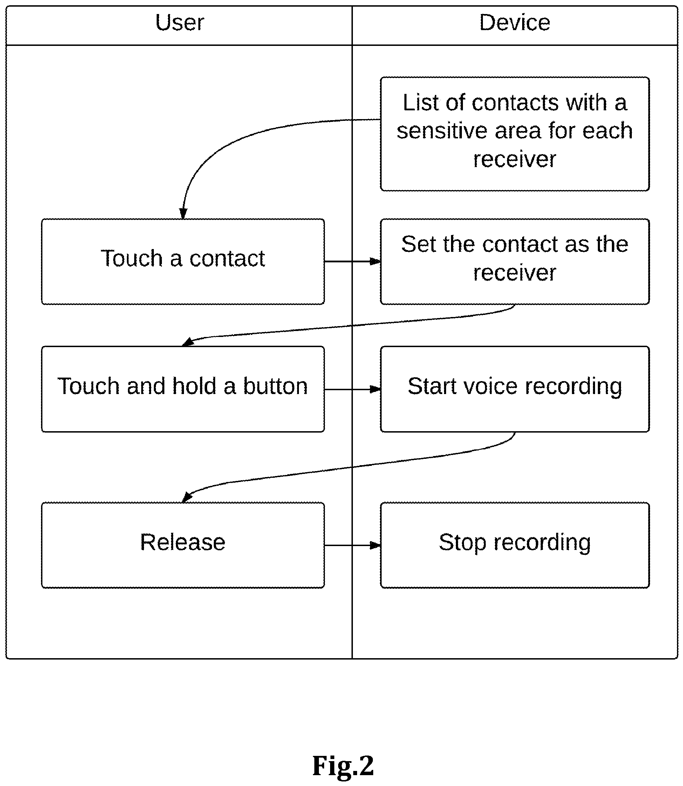

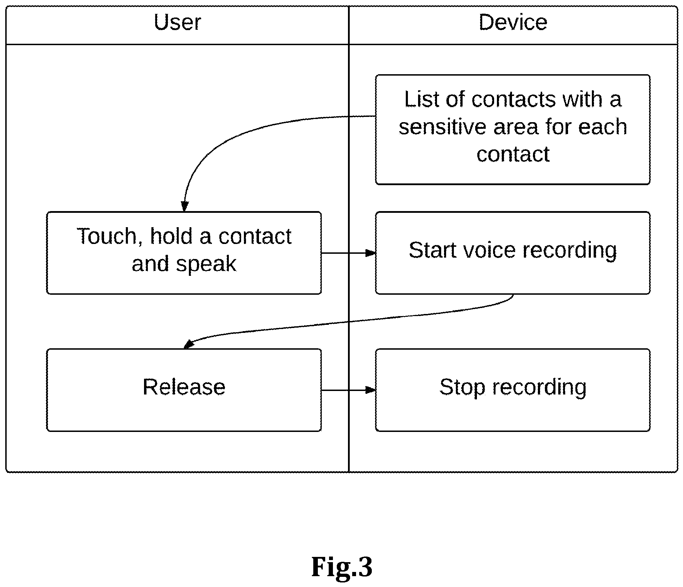

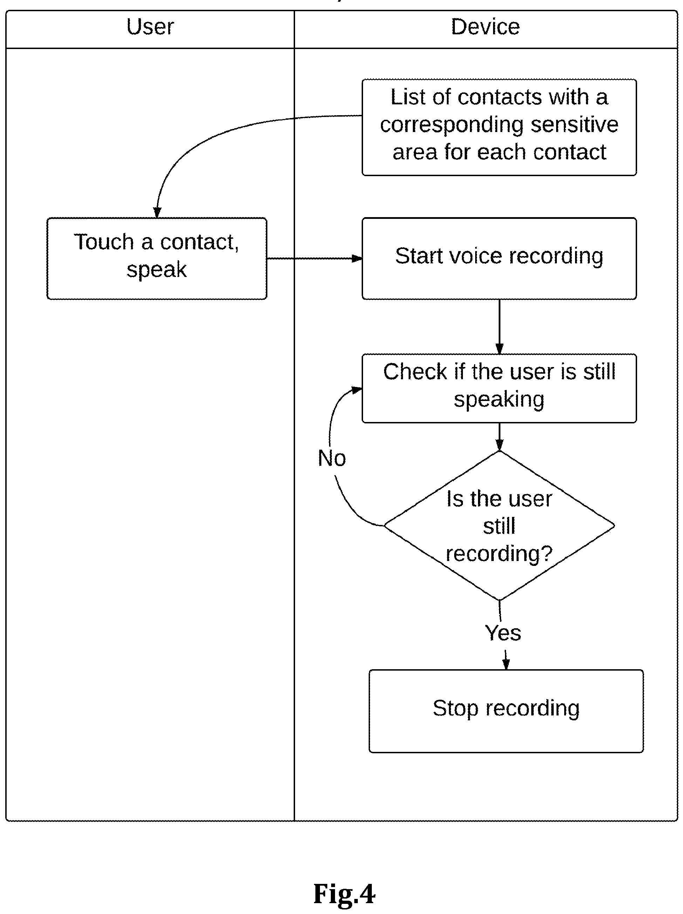

References will be made to the attached drawings, in which:
▪ Figures 1a-1c show a schematic view of some configurations of the user interface of a mobile phone that has at least one touch-sensitive screen zone;
▪ Figure 2 shows a block diagram of the operational phases of a method of the prior art;
▪ Figure 3 shows a block diagram of the operational phases of a first preferred embodiment of the method in accordance with the invention;
▪ Figure 4 shows a block diagram of the operational phase of a second preferred embodiment of the method in accordance with the invention.

### Detailed description of preferred embodiments

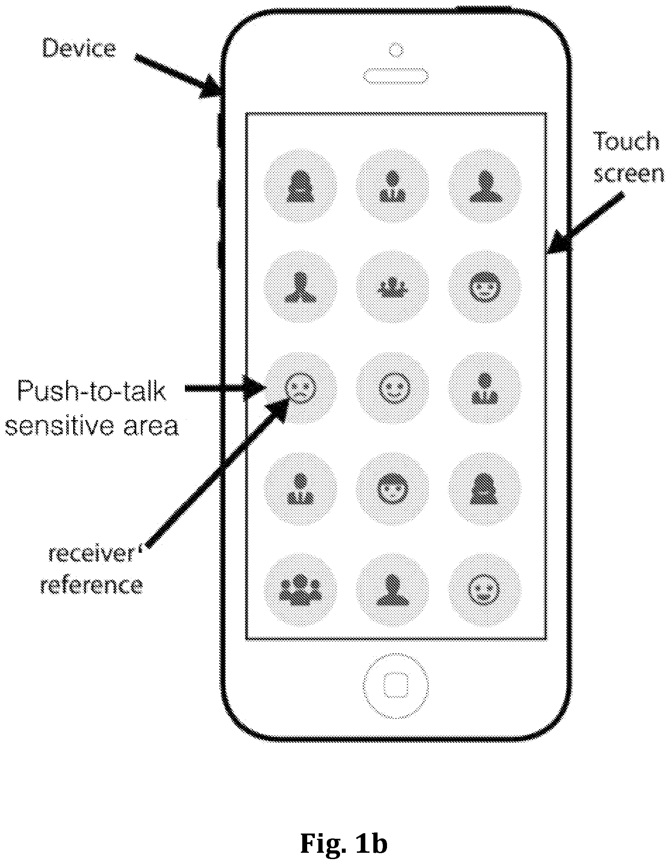

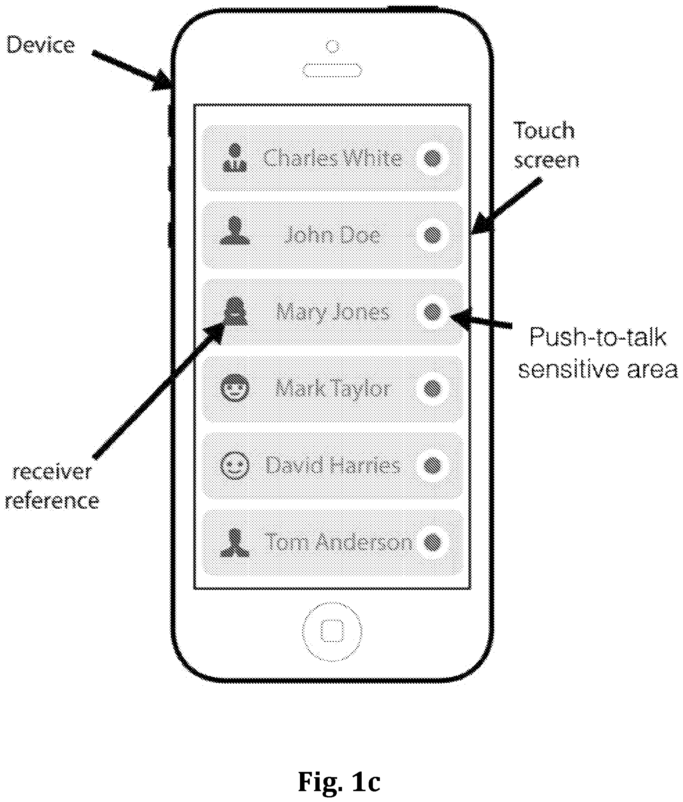

With reference to the above-mentioned Figures, a method for transmitting an audio message in accordance with a preferred embodiment of the invention is suitable for implementation through a pocket-sized electronic device, in particular through a mobile phone or a tablet having at least one touch-sensitive screen zone, for example a so-called "touch-screen" device as shown in Figures 1a, 1b and 1c.

Specifically, a "touch-screen" device is a device capable of recognizing which part of the screen has been touched and it allows the user to interact with a graphic interface. The interface often intuitively represents the various functions that will be activated in the various areas of the screen.

An alternative embodiment of the method in accordance with the present invention provides for the processing of an audio message through a personal computer, in which the sensitive area of the user interface can be equally activated through the touch, in case the personal computer is provided with a touch-sensitive screen, or through a pointer, for example a mouse or a keyboard.

A further embodiment also provides for the processing of a multimedia message or a message containing an audio component and/or a video component.

The method in accordance with the preferred embodiment comprises a step in which it is provisioned to provide a contact list in which every contact is associated to a dedicated screen portion. Through, for example, an initial selection of a "phone book" function, a list of contacts, previously saved on the device, is displayed on the screen of the device itself.

Every contact displayed on the screen can be associated to a line or a cell containing the information related to the specific contact, for example the name and/or personal images, and the telephone number.

The preferred embodiment of the method in accordance with the present invention provides for the execution of a step of selecting the receiver and activating the recording function through a single operation by the user.

Advantageously, the association between the recording function and the selection of a receiver of the message itself through a single pressing on the sensitive screen, reduces the time needed to complete the operation of transmitting the message.

In the first preferred embodiment, as schematized in the flow chart of Figure 3, a recording of the audio message occurs during the pressing action corresponding to at least one part of the screen portion dedicated to the specific contact. For example, the user applies pressure to the sensitive screen on an area corresponding to a selected receiver and, maintaining the pressing action on the screen, proceeds to record a voice message. Alternatively to or additionally to recording a voice message, the activation of a video camera and the recording of one or more pictures in a multimedia message, for example, are provided for. The recording of the message will be interrupted and the message will be sent in correspondence with a step of releasing the pressure. Alternatively, the sending of the message after a preset time from the interruption of the recording, for example a few seconds before or after the release of the pressure by the user, is provided for. Therefore the user applies prolonged pressure to the sensitive screen for the entire period in which the recording of the message occurs.

It has to be specified that all the described functions with reference to the discussed embodiments, such as activating a recording and selecting a receiver of the recorded message and ending the recording and transmitting the message itself, can be shifted in terms of time - for example anticipated or postponed for a few seconds - with respect to the operations, for example of pressure and release, that cause them.

Preferably, during the step of recording the audio message, a checking step in which the characteristic parameters of the message itself are checked is provided for.

Specifically, a voice detecting step is provided for, for example a checking step of whether the user is in a silent condition or a step of recognizing a voice command of the user.

In fact, an automatic interruption of the recording step in correspondence with the detecting of an invalid voice and/or the sending of the message itself in correspondence with a voice command to send the message can be provided for. The recording carried out in accordance with the above-described first embodiment can therefore be interrupted in correspondence with the detecting of an invalid voice.

Advantageously, through this possibility of interrupting and automatically sending, recordings in the audio message that contain non-useful information, such as for example prolonged voice pauses, will be avoided.

In a second embodiment of the method in accordance with the present invention, as schematized in the flow chart of Figure 4, an activation of the recording in correspondence with an action of pressure on at least one dedicated part of the screen is provided for. Therefore, in this case the recording is carried out without the need of maintaining pressure on the screen, and an automatic interruption of the recording step and a sending of the recorded message, for example in correspondence with the detecting an invalid voice or after the detecting of a user's voice command to send the message, are provided for. Alternatively, the interruption of the recording of the message and the sending of it, after a preset time, for example a few seconds after the detecting of an invalid voice or after the detecting of a user's voice command to send the message, are provided for.

Such a configuration proves to be particularly advantageous, for example, in all cases of emergency in which it is not possible to perform operations in sequence and/or it is necessary to send a message very quickly.

Preferably, the step of sending a message occurs contemporaneously with the step of activating the recording. This kind of transmission advantageously allows the receiver to receive the audio message of the sender in real time.

Specifically, the possibility of sending part of the message to a customized server or directly to the receiver's device, for example while its recording is in progress, is provided for. This sending can occur for example in real time, nearly instantaneously, or through the sending of portions of the message in correspondence with regular intervals of time.

The real time sending of the data allows for the avoidance of the transmission of messages that are too long and heavy, from the point of view of the transmission. Hence, this possibility makes the transmission of the message much faster.

In a further alternative embodiment of the method in accordance with the present invention, the activation of a recording through a selection of a previously stored message and a pressure in correspondence with the visualized message on the screen is provided for. Advantageously, the user can continue the recording from the point in which it had been interrupted in the previously stored message and proceed to transmit it in accordance with one of the above-described manners.

The present invention also comprises an implementation of the described method through a computer program.

Advantageously, the computer program can be implemented through the development of a software program that any programmable electronic device can run.

The present invention has been thus far described with reference to the preferred embodiments. It is implied that there can be other embodiments that refer to the same inventive nucleus, as defined in the range of protection of the claims reported below.

## Claims

1. A method for processing an audio message by a pocket electronic device, in particular a mobile phone, having at least one touch-sensitive screen zone, comprising the steps of:
- providing a list of contacts, each contact being associated to a dedicated screen portion;
- selecting a receiver of the audio message to be transmitted from the contact list displayed on the screen of the device;
- activating a function of recording an audio message to be sent;
- interrupting said recording function;
- transmitting the recorded voice message to the selected receiver;
wherein said steps of selecting and activating are carried out through a single pressing at least one zone of said dedicated screen portion,
**characterized in that**:
- a recording of the audio message occurs during said pressing of at least one zone of said dedicated screen portion, said interrupting of said recording comprises a step of releasing said pressing, and recording the audio message comprises a step of checking parameters characterizing the message itself, said step of checking comprises a voice detecting step, wherein an automatic interrupting of the recording step is provided at the detecting of an invalid voice;
or
said activating step is performed with an action of pressure on at least one zone of said dedicated screen portion, the recording is carried out without the need of maintaining pressure on the screen, and said interrupting and transmitting steps are automatically performed in correspondence with the detecting an invalid voice or after the detecting of a user's voice command to send the message, or after a preset time from said detecting.

2. The method according to any one claim 1, wherein said transmitted message further comprises a multimedia message.

3. The method according to claims 1 or 2, wherein said step of transmitting the message is concomitant with said step of activating the recording, said transmitting allowing the receiver to receive in real time the sender's audio message.

4. The method according to claims 1 or 2, wherein said step of transmitting the message is postponed with respect to said step of activating a recording.

5. The method according to the preceding claim, wherein a further step of activating a recording is activable by a selecting of a previously stored message, said selecting comprising a pressing at said stored message displayed on said screen.

6. A computer program comprising instructions which, when the program is executed by a computer, causes the computer to carry out the steps of the method according to one of the claims 1 to 5.

## Patentansprüche

1. Verfahren zur Verarbeitung einer Audionachricht durch eine elektronische Taschenvorrichtung, insbesondere ein Mobiltelefon, mit mindestens einem berührungsempfindlichen Bildschirmbereich, umfassend die folgenden Schritte:
- Bereitstellen einer Liste von Kontakten, wobei jeder Kontakt einem dedizierten Bildschirmabschnitt zugeordnet ist;
- Auswählen eines Empfängers der zu übertragenden Audionachricht aus der Kontaktliste, die auf dem Bildschirm der Vorrichtung angezeigt wird;
- Aktivieren einer Funktion zum Aufzeichnen einer zu sendenden Audionachricht;
- Unterbrechen der Aufzeichnungsfunktion;
- Übertragen der aufgezeichneten Sprachnachricht an den ausgewählten Empfänger;
wobei die Schritte des Auswählens und Aktivierens durch ein einmaliges Drücken mindestens eines Bereichs des dedizierten Bildschirmabschnitts ausgeführt werden,
**dadurch gekennzeichnet, dass**:
- ein Aufzeichnen der Audionachricht während des Drückens mindestens eines Bereichs des dedizierten Bildschirmabschnitts erfolgt, das Unterbrechen des Aufzeichnens einen Schritt des Unterlassens des Drückens umfasst, und das Aufzeichnen der Audionachricht einen Schritt des Überprüfens von Parametern umfasst, die die Nachricht selbst kennzeichnen, wobei der Schritt des Überprüfens einen Spracherkennungsschritt umfasst, wobei ein automatisches Unterbrechen des Aufzeichnungsschritts bei Erkennen einer ungültigen Stimme bereitgestellt wird;
oder
der Aktivierungsschritt mit einer Einwirkung von Druck auf mindestens einen Bereich des dedizierten Bildschirmabschnitts ausgeführt wird, das Aufzeichnen ohne die Notwendigkeit, den Druck auf den Bildschirm aufrechtzuerhalten, ausgeführt wird, und die Unterbrechungs- und Übertragungsschritte automatisch in Übereinstimmung mit dem Erkennen einer ungültigen Stimme oder nach dem Erkennen eines Sprachbefehls eines Benutzers zum Senden der Nachricht oder nach einer voreingestellten Zeit ab dem Erkennen ausgeführt werden.

2. Verfahren nach einem der Ansprüche 1, wobei die übertragene Nachricht ferner eine Multimedia-Nachricht umfasst.

3. Verfahren nach Anspruch 1 oder 2, wobei der Schritt des Übertragens der Nachricht gleichzeitig mit dem Schritt des Aktivierens des Aufzeichnens erfolgt, wobei das Übertragen es dem Empfänger ermöglicht, die Audionachricht des Senders in Echtzeit zu empfangen.

4. Verfahren nach Anspruch 1 oder 2, wobei der Schritt des Übertragens der Nachricht in Bezug auf den Schritt des Aktivierens eines Aufzeichnens verschoben wird.

5. Verfahren nach dem vorhergehenden Anspruch, wobei ein weiterer Schritt zum Aktivieren eines Aufzeichnens durch ein Auswählen einer zuvor gespeicherten Nachricht aktivierbar ist, wobei das Auswählen ein Drücken auf die gespeicherte Nachricht umfasst, die auf dem Bildschirm angezeigt wird.

6. Computerprogramm, umfassend Anweisungen, die, wenn das Programm von einem Computer ausgeführt wird, den Computer veranlassen, die Schritte des Verfahrens nach einem der Ansprüche 1 bis 5 auszuführen.

## Revendications

1. Procédé de traitement d'un message audio par un dispositif électronique de poche, notamment par un téléphone portable, comportant au moins une zone d'écran tactile, comprenant les étapes suivantes :
- fourniture d'une liste de contacts, chaque contact étant associé à une partie d'écran dédiée ;
- sélection d'un récepteur du message audio à transmettre à partir de la liste de contacts affichée sur l'écran du dispositif ;
- activation d'une fonction d'enregistrement d'un message audio à envoyer ;
- interruption de ladite fonction d'enregistrement ;
- transmission du message vocal enregistré au récepteur sélectionné ;
dans lequel lesdites étapes de sélection et d'activation sont effectuées par une seule pression sur au moins une zone de ladite partie d'écran dédiée,
**caractérisé en ce que** :
- un enregistrement du message audio se produit lors de ladite pression sur au moins une zone de ladite partie d'écran dédiée, ladite interruption dudit enregistrement comprend une étape de relâchement de ladite pression et l'enregistrement du message audio comprend une étape de vérification de paramètres caractérisant le message lui-même, ladite étape de vérification comprend une étape de détection de voix, dans lequel une interruption automatique de l'étape d'enregistrement est prévue lors de la détection d'une voix invalide ;
ou
ladite étape d'activation est effectuée par une action de pression sur au moins une zone de ladite partie d'écran dédiée, l'enregistrement est effectué sans qu'il soit nécessaire de maintenir une pression sur l'écran et lesdites étapes d'interruption et de transmission sont automatiquement effectuées en correspondance avec la détection d'une voix invalide ou après la détection d'une commande vocale d'un utilisateur pour envoyer le message ou après un temps prédéfini à partir de ladite détection.

2. Procédé selon la revendication 1, dans lequel ledit message transmis comprend en outre un message multimédia.

3. Procédé selon les revendications 1 ou 2, dans lequel ladite étape de transmission du message est concomitante à ladite étape d'activation de l'enregistrement, ladite transmission permettant au récepteur de recevoir en temps réel le message audio de l'expéditeur.

4. Procédé selon les revendications 1 ou 2, dans lequel ladite étape de transmission du message est reportée par rapport à ladite étape d'activation d'un enregistrement.

5. Procédé selon la revendication précédente, dans lequel une autre étape d'activation d'un enregistrement peut être activée par sélection d'un message précédemment stocké, ladite sélection comprenant une pression sur ledit message stocké affiché sur ledit écran.

6. Programme informatique comprenant des instructions qui, lorsque le programme est exécuté par un ordinateur, amènent l'ordinateur à exécuter les étapes du procédé selon l'une des revendications 1 à 5.
